# EUROPEAN PATENT APPLICATION

(11) **EP 2 343 674 A2**
(43) Date of publication of application: **13.07.2011**
(21) Application number: 10252198.6
(22) Date of filing: 22.12.2010
(51) Int. Cl.: G06Q 10/00

(54) **Method and system for achieving a remot control help session on a computing device**

(30) Priority: 30.12.2009 US 655461
(71) Applicant: Intel Corporation, Santa Clara, CA 95052 (US)
(72) Inventor: Fulginiti Dominic, Beaverton, OR 97007 (US)
(74) Representative: Beresford, Keith Denis Lewis

(57) **Abstract**

A method and system for achieving a remote control help session on a computing device. The method includes receiving, at an online service datacenter, a request from a remote service provider computer to obtain a pass code for an end user of a malfunctioning computing device. Sending the pass code to the remote service provider computer, wherein a service provider technician provides the pass code to the end user. Securely connecting the malfunctioning computing device to the online service datacenter. Securely connecting the remote service provider computer to the online service datacenter. Linking the remote service provider computer to a PC session indicated by the pass code and enabling the service provider computer to connect through the online service datacenter to the malfunctioning computing device. The remote service provider computer, via firmware residing on the malfunctioning computing device, enables the service provider technician to diagnose, repair, and/or optimize the malfunctioning computing device.

## Description

### Field of the Invention

The present invention is generally related to the field of remote computer repair services. More particularly, the present invention is related to a method and apparatus for achieving a remote control help session on a computing device.

### Description

Industry has lots of software-based (SW-based) solutions for remotely accessing and repairing a computing device, such as, for example, a personal computer (PC), that is experiencing problems. All of these SW-based solutions fail in instances where the Operating System (OS) of the computing device won't boot or network access is malfunctioning. In other words, these SW-based solutions require the computing device to be somewhat functional.

### BRIEF DESCRIPTION OF THE DRAWINGS

The accompanying drawings, which are incorporated herein and form part of the specification, illustrate embodiments of the present invention and, together with the description, further serve to explain the principles of the invention and to enable a person skilled in the pertinent art(s) to make and use the invention. In the drawings, like reference numbers generally indicate identical, functionally similar, and/or structurally similar elements. The drawing in which an element first appears is indicated by the leftmost digit(s) in the corresponding reference number.
FIG. 1 is a simplified block diagram illustrating an exemplary remote PC assist technology (RPAT) end to end service architecture according to an embodiment of the present invention.
FIG. 2 is a simplified block diagram of An enemplary hosted datacenter in an RPAT service end to end architecture according to an embodiment of the present invention.
FIG. 3 is a simplified block diagram of an exemplary onsite datacenter in an RPAT service end to end architecture according to an embodiment of the present invention.
FIG. 4 is a simplified block diagram of an exemplary software environment for a service technician PC according to an embodiment of the present invention.
FIG. 5 is a flow diagram describing an exemplary method for remote PC assist technology (RPAT) services according to an embodiment of the present invention.
FIG. 6 is an exemplary screen shot illustrating a boot screen with a message indicating to an end user how to enter the pre-OS remote PC assist wizard user interface by simultaneously pressing the CTRL-ALT-F1 keys according to an embodiment of the present invention.
FIG. 7 is an exemplary screen shot illustrating a prompt for the pass code entry according to an embodiment of the present invention.
FIG. 8 is a flow diagram describing another exemplary method for remote PC assist technology (RPAT) services according to an embodiment of the present invention.
FIG. 9 is an exemplary screen shot of a provider marketplace list selection according to an embodiment of the present invention.

### DETAILED DESCRIPTION

While the present invention is described herein with reference to illustrative embodiments for particular applications, it should be understood that the invention is not limited thereto. Those skilled in the relevant art(s) with access to the teachings provided herein will recognize additional modifications, applications, and embodiments within the scope thereof and additional fields in which embodiments of the present invention would be of significant utility.

Reference in the specification to "one embodiment", "an embodiment" or "another embodiment" of the present invention means that a particular feature, structure or characteristic described in connection with the embodiment is included in at least one embodiment of the present invention. Thus, the appearances of the phrase "in one embodiment" or "in an embodiment" appearing in various places throughout the specification are not necessarily all referring to the same embodiment.

Some embodiments of the disclosure may be implemented in hardware, firmware, software, or any combination thereof. Embodiments of the disclosure implemented in a computer system may include one or more bus-based interconnects between components and/or one or more point-to-point interconnects between components. Embodiments of the invention may also be implemented as instructions stored on a machine-readable, tangible medium, which may be read and executed by one or more processors. A machine-readable, tangible medium may include any tangible mechanism for storing or transmitting information in a form readable by a machine (such as, a computing device). For example, a machine-readable, tangible medium may include read only memory (ROM); random access memory (RAM); magnetic disk storage media; optical storage media; flash memory devices; and other tangible mediums.

Embodiments of the present invention are directed to a method and system for providing assistance to end users in finding, enrolling and connecting with remote service providers that utilize embedded computing device technologies to diagnose, repair and/or optimize the end user's computing device experience. Embodiments of the present invention provide a way for end users to receive service without prior provisioning/configuration steps on their computing device, and works even when the user's OS is non-functional. This is accomplished with an end user computing device having an Out-Of-Band (OOB) processor implemented using Intel® Active Management Technology (Intel® AMT) and an Intel® Management Engine (Intel® ME), all available from Intel Corporation of Santa Clara, California, and/or within chipsets sold by Intel Corporation; a connectivity service capable of operating with two different user interfaces on the end user computing device; firmware on the end user computer device having specific connection and trust settings hardcoded into the firmware to allow an end user computing device to create a trusted connection to the connectivity service; and a pass code, provided to the user of the end user computing device, to complete the secure connection through the connectivity service to a service provider. One user interface is an OS-resident user interface that runs in the user's OS to interact with the connectivity service. The second user interface is a pre-OS/BIOS-based user interface implemented in the management engine BIOS extensions (MEBx) module specific to operations with the connectivity service.

Although embodiments of the present invention are described with respect to a consumer PC with hardware, firmware, BIOS and software capabilities to interact with the connectivity service, the invention is not limited to consumer PCs. Embodiments of the invention may also be applicable to mobile computing devices, such as, but not limited to, notebooks, laptops, netbooks, mobile internet devices (MIDs), and ultra mobile PCs, and desktop computing devices, such as, but not limited to, workstations, PCs in entertainment centers, nettops, and set top boxes. Although embodiments of the present invention are not necessarily limited to OOB connections, embodiments of the present invention may be enhanced by OOB connections.

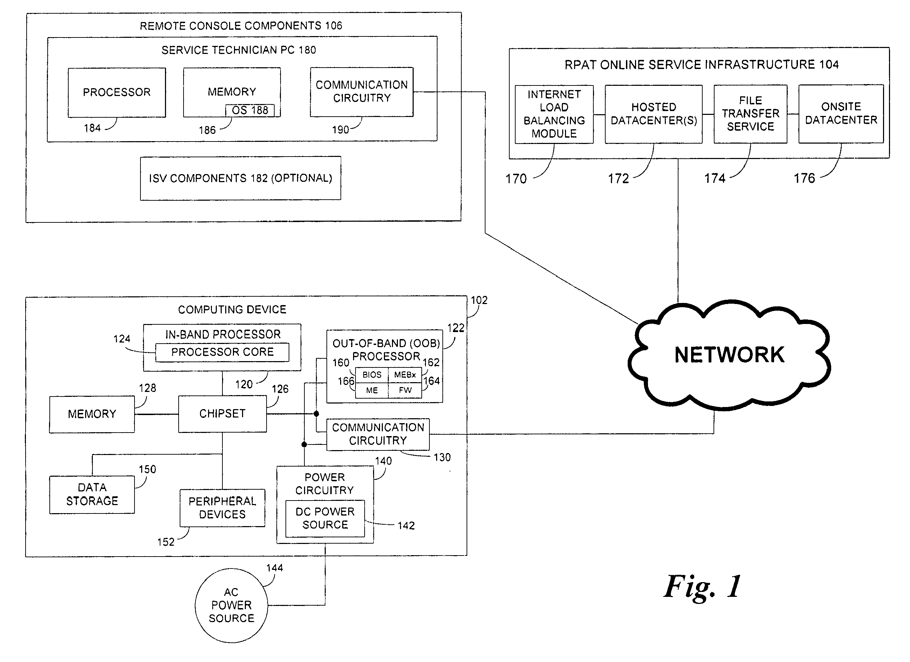

Referring now to FIG. 1, an exemplary remote PC assist technology (RPAT) end to end service architecture 100 is shown. The RPAT end to end service architecture 100 is configured to provide assistance to end users in finding, enrolling and connecting with remote service providers to diagnose, repair and/or optimize an end user computing device that is malfunctioning. The RPAT end to end service architecture 100 includes one or more computing devices, such as computing device 102, an RPAT service online infrastructure 104, remote console components 106, and a network 108 that communicatively couples the remote console components 106 to the computing devices 102 via the RPAT online service infrastructure 104.

The network 108 may be embodied as any type of wired and/or wireless network such as a local area network, a wide area network, a publicly available global network (such as, for example, the Internet), or other networks. Additionally, the network 108 may include any number of additional devices (not shown) to facilitate the communication between the computing device 102, the RPAT online service infrastructure 104, and the remote console components 106, such as routers, switches, intervening computers, and the like.

Although the computing device 102 is described throughout the disclosure as a personal computer, the computing device 102 may be embodied as any type of electronic device capable of performing the functions described herein. For example, the computing device 102 may be embodied as a personal computer, a workstation, a laptop computer, a handheld computer, a mobile internet device, a cellular phone, a personal data assistant, a telephony device, a network appliance, a virtualization device, a storage controller, or other computer-based device.

An exemplary computing device 102 includes an in-band processor 120, an out-of-band (OOB) processor 122, a chipset 126, a memory 128, communication circuitry 130, and power circuitry 140. In some embodiments, the computing device 102 may also include one or more data storage devices 150 and/or one or more additional peripheral devices 152. In some illustrative embodiments, several of the foregoing components may be incorporated on a motherboard of the computing device 102, while other components may be communicatively coupled to the motherboard via, for example, a peripheral port. Furthermore, it should be appreciated that the computing device 102 may include other components, sub-components, and devices commonly found in a computer and/or computing device, which are not illustrated in FIG. 1 for clarity of the description.

The in-band processor 120 of the computing device 102 may be any type of processor capable of executing software/firmware, such as a microprocessor, digital signal processor, microcontroller, or the like. The in-band processor 120 is illustratively embodied as a single core processor having a processor core 124. However, in other embodiments, the in-band processor 120 may be embodied as a multi-core processor having multiple processor cores 124. Additionally, the computing device 102 may include additional in-band processors 120 having one or more processor cores 124. The in-band processor 120 is generally responsible for executing a software stack, which may include an operating system and various applications, programs, libraries, and drivers resident on the computing device 102.

The chipset 126 of the computing device 102 may include a memory controller hub (MCH or "northbridge"), an input/output controller hub (ICH or "southbridge"), and a firmware device. In such embodiments, the firmware device may be embodied as a memory storage device for storing Basic Input/Output System (BIOS) data and/or instructions and/or other information. However, in other embodiments, chipsets having other configurations may be used. For example, in some embodiments, the chipset 126 may be embodied as a platform controller hub (PCH). In such embodiments, the memory controller hub (MCH) may be incorporated in or otherwise associated with the in-band processor 120.

The chipset 126 is communicatively coupled to the in-band processor 120 via a number of signal paths. These signal paths (and other signal paths illustrated in FIG. 1) may be embodied as any type of signal paths capable of facilitating communication between the components of the computing device 102. For example, the signal paths may be embodied as any number of wires, cables, light guides, printed circuit board traces, vias, buses, intervening devices, and/or the like.

The memory 128 of the computing device 102 is also communicatively coupled to the chipset 126 via a number of signal paths. The memory 128 may be embodied as one or more memory devices or data storage locations including, for example, dynamic random access memory devices (DRAM), synchronous dynamic random access memory devices (SDRAM), double-data rate synchronous dynamic random access memory device (DDR SDRAM), flash memory devices, and/or other volatile memory devices. Additionally, although only a single memory device 128 is illustrated in FIG. 1, in other embodiments, the computing device 102 may include additional memory devices. The operating system, applications, programs, libraries, and drivers that make up the software stack executed by the in-band processor 120 may reside in memory 128 during execution. Furthermore, software and data stored in memory 128 may be swapped between memory 128 and one or more data storage devices 150 as part of memory management operations.

In one embodiment, a user interface (UI) referred to as an OS-resident remote PC assist wizard may run in the operating system (not shown) of computing device 102. The OS-resident remote PC assist wizard enables an end user to interact and connect with the RPAT online service infrastructure 104. The operating system of computing device 102 may also include a Managed Service Provider (MSP) agent to facilitate remote access to computing device 102 from the MSP. The MSP agent also gathers data about the computing device 102 and transfers files for the purpose of repairing the operating system of the computing device 102. The operating system of computing device 102 may also include an RPAT software development kit to integrate ISV (Independent Software Vendor) agents on the computing device 102, allow the redirection of TCP/IP level agents to remote console 106 through the RPAT online service infrastructure 104, and provide programmatic access to RPAT functions, such as, for example, enroll, connect, pass data to remote console, etc.

The computing device 102 also includes communication circuitry 130 for communicating with RPAT online service infrastructure 104 and remote console components 106 over network 108. The communication circuitry 130 may be embodied as any number of devices and circuitry for enabling communications between the computing device 102 and RPAT online service infrastructure 104 and remote console components 106. For example, the communication circuitry 130 may be embodied as one or more wired or wireless network interface cards (NICs) or other network communication cards, modules, or circuits for communicating with RPAT online service infrastructure 104, remote console components 106, or any other remote computing devices (not shown) over the network 108. Communication circuitry 130 is also communicatively coupled to the chipset 126 via a number of signal paths, allowing the in-band processor 120 to access the network 108.

The components of computing device 102, including in-band processor 120, chipset 126, memory 128, and communication circuitry 130, are also operably coupled to power circuitry 140. The power circuitry 140 may be embodied as a circuit capable of drawing power from an AC commercial power source 144, a DC battery power source 142, or both. To conserve energy, the computing device 102 may be placed in several reduced-power operational states when not being actively used. For example, the computing device 102 may be placed in a powered down or "off' state in which few, if any, components of the computing device 102 receive power from the power circuitry 140. Alternatively, the computing device 102 may be placed into various "sleep" or "hibernate" states in which some, but not all, components of computing device 102 receive power from the power circuitry 140. For instance, a "sleep" state may provide power to a volatile memory 128 (in order to retain data) but not to the in-band processor 120. Such a reduced-power operational state conserves energy while allowing the computing device 102 to return quickly to a full-power operational state.

The out-of-band (OOB) processor 122 is distinct from and generally operates independently of the in-band processor 120. The OOB processor 122 may also be embodied as any type of processor capable of executing software, such as a microprocessor, digital signal processor, microcontroller, or the like, including one or more processors having one or more processor cores (not shown). The OOB processor 122 may be integrated into the chipset 126 on the motherboard or may be embodied as one or more separate integrated circuits disposed on an expansion board that is communicatively coupled to the chipset 126 via a number of signal paths. The OOB processor 122 may also be communicatively coupled to various components of the computing device 102, such as the memory 128 and the communication circuitry 130, via a number of signal paths. Alternatively or additionally, the OOB processor 122 may include built-in components with similar functionality, such as a dedicated memory and/or dedicated communication circuitry (not shown).

The OOB processor 122 is configured for managing particular functions of the computing device 102 irrespective of the operational state of the in-band processor 120. To facilitate such independent operation, the OOB processor 122 may be provided with an independent connection to the power circuitry 140, allowing the OOB processor 122 to retain power even when other components of the computing device 102 are powered down or turned off. Furthermore, the OOB processor 122 may be provided with one or more independent network interfaces via communication circuitry 130, which is also provided with an independent connection to the power circuitry 140, allowing out-of-band communications over the network 108. In other words, the OOB processor 122 is able to communicate directly with devices on the network 108, (such as RPAT online service infrastructure 104 and remote console components 106), outside of the operating system running on in-band processor 120. In fact, this communication may take place without the user's knowledge. The OOB processor 122 is also capable of causing the computing device 102 to return to a full-power operational state, including booting the operating system. In summary, the OOB processor 122 may operate intelligently based on incoming queries/commands and communicate across the network 108 whether the in-band processor 120 is turned off, running on standby, being initialized, or in regular operation and whether the operating system is booting, running, crashed, or otherwise.

In some illustrative embodiments, the OOB processor 122 may be implemented using Intel® Active Management Technology (Intel® AMT) and Intel® Management Engine (Intel® ME), all available from Intel Corporation of Santa Clara, California, and/or within chipsets sold by Intel Corporation. Intel AMT® embedded platform technology enables out-of-band access to hardware and software information stored in non-volatile memory on each endpoint device, eliminating the need for a functioning operating system and many of the software agents found in other management tools.

The OOB processor 122 may also include a Basic Input/Output System (BIOS) 160, a Management Engine BIOS Extension (MEBx), 162, and AMT Firmware 164 running on the ME 166. The AMT Firmware 164 may include firmware enhancements specific to operations with the RPAT online service infrastructure 104. For example, specific connection and trust settings may be hardcoded into the AMT Firmware 164 to allow a computing device 102 to create a trusted connection to the RPAT online service infrastructure 104. A BIOS-based user interface (UI) may be implemented as an enhancement to the Management Engine BIOS extension (MEBx) module specific to operations with the RPAT online service infrastructure 104. For example, the BIOS-based user interface may be used as a Pre-OS remote wizard to enable access to the RPAT online service infrastructure even when the user's operating system is non-functional.

As discussed above, the computing device 102 may also include one or more data storage devices 150 and one or more peripheral devices 152. In such embodiments, the chipset 126 is also communicatively coupled to the one or more data storage devices 150 and the one or more peripheral devices 152 via a number of signal paths. The data storage device(s) 150 may be embodied as any type of device configured for the short-term or long-term storage of data such as, for example, memory devices and circuits, memory cards, hard disk drives, solid-state drives, or other data storage devices. The peripheral device(s) 152 may include any number of peripheral devices including input devices, output devices, and other interface devices. For example, the peripheral devices 152 may include a display, a mouse, a keyboard, and/or one or more external speakers of the computing device 102. The particular devices included in the peripheral devices 152 may depend upon, for example, the intended use of the computing device.

RPAT online service infrastructure 104 is a connectivity service that routes connectivity requests to the right datacenters based on geographic locality or other performance considerations, such as, but not limited to, latency, congestion, etc. RPAT online service infrastructure 104 enables remote console components 106 to be coupled to computing devices 102 to diagnose, repair and/or optimize an end user's malfunctioning computing device 102. RPAT online service infrastructure 104 also handles billing transaction services for the RPAT online service infrastructure 104.

The RPAT online service infrastructure 104 includes an internet load balancing module 170, one or more hosted datacenter(s) 172, a file transfer service 174, and an onsite datacenter 176. The Internet load balancing module 170 is communicatively coupled to the one or more hosted datacenter(s) 172. The one or more hosted data center(s) 172 is communicatively coupled to the file transfer service 174. The file transfer service 174 is communicatively coupled to the onsite datacenter 176.

The RPAT online service infrastructure 104 is designed so that several data centers can be used for scalability, even though the firmware only knows one root Internet address and one root certificate. In order to achieve scalability across datacenters, Internet load balancing module 170 is used to achieve scalability across datacenters by load balancing the Internet domain name across multiple datacenters around the world, with each datacenter housing multiple servers and other computer equipment (not shown). The Internet load balancing module 170 routes connectivity requests to the right datacenter based on either geographic location relative to specific datacenters as well as current localized Internet congestion, and/or other performance considerations, such as, for example, latency, etc.

The one or more hosted datacenter(s) 172 is a primary datacenter that houses servers and other computing equipment (not shown) for the RPAT online service infrastructure 104 running on the Internet. In embodiments, the one or more hosted datacenter(s) 172 may be rented space in third party hosting facilities.

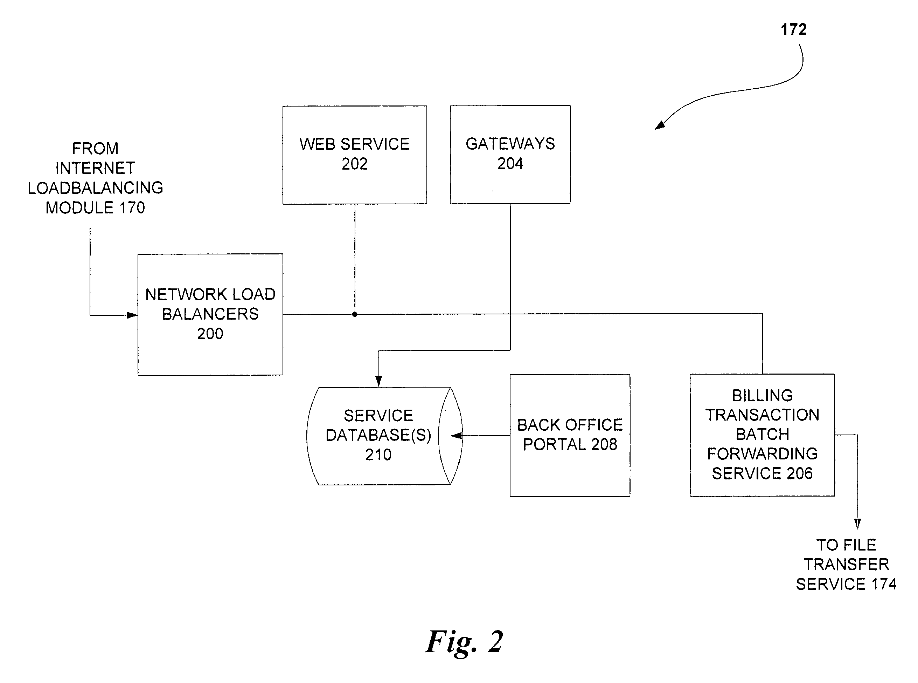

FIG. 2 is a simplified block diagram of a hosted datacenter 172 in an RPAT service end to end architecture according to an embodiment of the present invention. The host datacenter 172 comprises, *inter alia,* network load balancers 200, web service 202, gateways 204, a billing transaction batch forwarding service 206, a back office portal 208, and one or more service database(s) 210.

The hosted datacenter 172 is designed for internal load balancing. Network load balancers 200 reside on each hosted datacenter network and are used to load balance incoming requests to multiple servers in the hosted data center 172 for redundancy and scalability.

Web service 202 is a function hosted on web servers (not shown) in the datacenter 172. Web service 202 supports all interactions with the RPAT online service infrastructure 104 except the actual connections to the computing devices 102 seeking assistance. The supported interactions may include, but are not limited to, providing pass codes, creating Managed Service Providers (MSPs) (discussed below with reference to remote console components 106), registering and enrolling computing devices 102 and service providers, allowing Independent Service Vendors (ISVs) to add service providers for ISV bundled solutions, etc..

Gateways 204 are used for tunneling data between MSP consoles (discussed below with reference to remote console components 106) and computing devices 102 and for negotiating peer to peer sessions (when possible, given network conditions). For example, gateways 204 may tunnel data from MSP consoles to a gateway 204, in-band data from computing device 102 to a gateway 204, and OOB data from the AMT firmware of the computing device 102 to a gateway 204. Gateways 204 also help clients discover their public NAT IP address and port information in order to facilitate the direct connection between peer clients. Gateways 204 may be implemented in hardware, software, or a combination thereof.

Billing transactions batch forwarding service 206 comprises a service for forwarding connectivity data records from the one or more hosted datacenter(s) 172 to the onsite datacenter 176. Billing transactions batch forwarding service 206 may be implemented in hardware, software, or a combination thereof.

Back office portal 208 is a web portal for the administration of RPAT service data, such as, for example, adding/changing MSP accounts, marketplace semantics, etc. Back office portal 208 may be implemented in hardware, software, or a combination thereof.

The one or more service database(s) 210 comprises a repository of all data for the service to operate to connect computing devices 102 with remote console components 106, such as data regarding MSPs, PCs, enrollments, pass codes, connection history, etc.

Returning to FIG. 1, file transfer service (FTS) 174 is used for secure file transfer between the one or more hosted datacenter(s) 172 and the onsite datacenter 176.

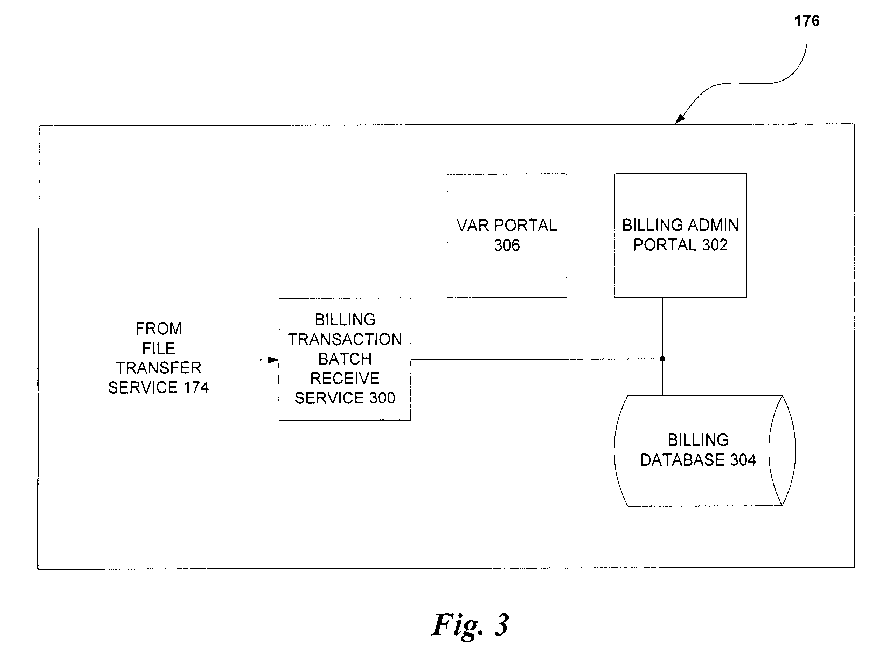

Onsite datacenter 176 is a datacenter located on the site of the RPAT service (that is, a site that is owned by the RPAT service, not a rented location). Onsite datacenter 176 is a facility used to host sensitive customer data and processes such as, for example, billing terms, payment history, etc. FIG. 3 is a simplified block diagram of an onsite datacenter 176 according to an embodiment of the present invention. Onsite datacenter 176 comprises a billing transactions batch receive service 300, a Billing admin portal 302, a billing database 304, and a VAR portal 306.

Billing transactions batch receive service 300 is used to receive billing records from the externally hosted portion (that is, the billing transaction batch forwarding service 206) of the RPAT service infrastructure 104. Billing admin portal 302 is used to administer billing such as setting billing terms, generating bills, etc. Billing database 304 is a repository of the complete set of data required to charge customers of the service. Connectivity data is forwarded from the one or more service databases 210 and processed along with per-customer billing terms (which are only stored in the billing database 304) to allow invoices and reports to be generated. VAR portal 306 is a separate portal used to facilitate partners signing up for the service.

The remote console components 106 are components of a service provider that enable the service provider to provide services to the remote computing devices 102 in need of assistance. The remote console components 106 comprise one or more service technician PCs 180 and optional ISV (Independent Service Vendor) components 182. Optional ISV components 182 may include ISV software and/or equipment that reside in the service provider's datacenter.

The service technician PCs 180 are PCs that technicians from the service providers may use to remotely access computing devices 102 via RPAT service online infrastructure 104. Service technician PCs 180 may be built by a third party, such as, for example, a PC manufacturer, and owned by a service provider. In one embodiment, the PC manufacturer and the service provider may be the same entity. In another embodiment, the PC manufacturer and the service provider may be separate entities.

The service technician PCs 180 may be embodied as a type of computing device separate from the computing device 102. For example, the service technician PCs 180 may be embodied as one or more personal computers, workstations, laptop computers, or other computer-based devices configured to provide assistance to computing devices 102. The service technician PCs 180 may include similar components to that of the computing device 102, such as, but not limited to, for example, a processor 184, memory 186 (having stored thereon an OS 188), and communication circuitry 190.

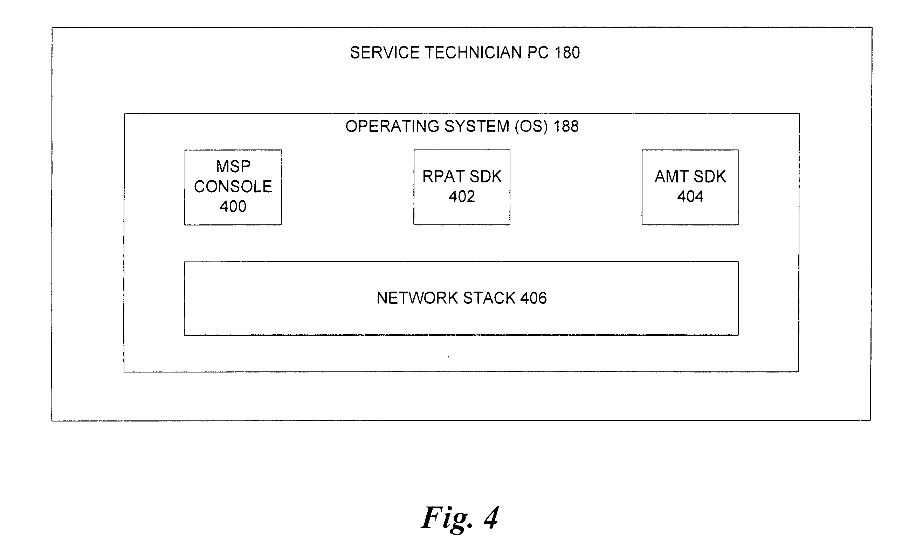

FIG. 4 is a simplified block diagram of a software environment for the service technician PC 180 according to an embodiment of the present invention. Service technician PC 180 comprises, *inter alia,* operating system 188 having a managed service provider (MSP) console 400, an RPAT Software Development Kit (SDK) 402, an Active Management Technology (AMT) Software Development Kit (SDK) 404, and a network stack 406.

Operating system 188 is an operating system that runs on the service technician PC 180. In one embodiment, the operating system 188 may be an operating system manufactured by Microsoft® Corporation, located in Redmond, Washington. In another embodiment, other operating systems may be used, such as, but not limited to, Linux operating systems.

The MSP (Managed Service Provider) console 400 is a remote console application used by a service technician to connect the service technician PC 180 through the RPAT online service infrastructure 104 to the computing devices 102 requesting assistance. In one embodiment, MSP console 400 runs in the operating system 188, and is programmatically integrated to the RPAT online service infrastructure 104 using the RPAT SDK 402.

The RPAT SDK 402 is a software development kit that contains binary executables, reference/example code, and documentation to enable an ISV to integrate their MSP console 400 with the RPAT service infrastructure 104.

The AMT SDK 404 comprises a building block that, in conjunction with the RPAT SDK 402, interacts with the manageability features on the computing device 102 to enable remote operations of components on the computing device 102, such as, but are not limited to, remote operations of the keyboard, video, and mouse.

The network stack 406 comprises software running in the operating system 188 that provides network connectivity for service technician PCs 180. Network connectivity may be wired connectivity as well as wireless connectivity.

In one embodiment, remote console components 106 may comprise an optional SaaS (software as a service) ISV hosted application. The SaaS ISV hosted application may comprise ISV datacenter(s) in instances where an ISV has its own infrastructure and prefers to utilize its own infrastructure rather than the infrastructure of the remote console components 106.

Computing devices 102 may be end user PCs that comprise, *inter alia,* PC platform components that act as a system and are entirely independent of the presence and state of the operating system and software installed on the computing devices 102. When a computing device 102 encounters a computer problem that requires assistance from a service provider, the computing device 102 includes a tamper resistant component (the AMT firmware running on a Management Engine (ME)) that allows computing device 102 to create a trusted connection to the RPAT online service infrastructure 104, even when the OS is non-functional. In one embodiment, all that is required of the end user of the computing device 102 is to enter a single string of digits referred to as a pass code, and the RPAT online service infrastructure 104, in turn, will complete the secure connection to a service provider for assistance with the diagnosis and repair of the computing device 102.

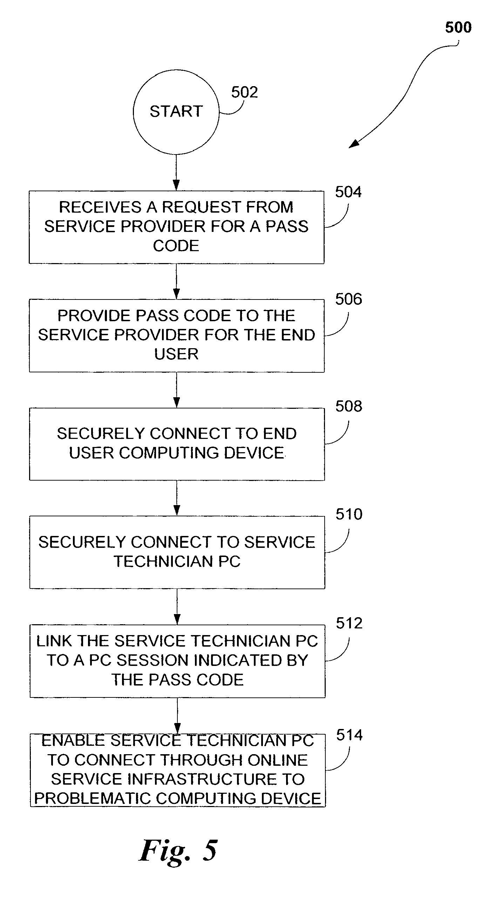

FIG. 5 is a flow diagram 500 describing an exemplary method for remote PC assist technology (RPAT) services according to an embodiment of the present invention. The invention is not limited to the embodiment described herein with respect to flow diagram 500. Rather, it will be apparent to persons skilled in the relevant art(s) after reading the teachings provided herein that other functional flow diagrams are within the scope of the invention. The process begins with block 502, where the process immediately proceeds to block 504.

In block 504, the RPAT online service infrastructure 104 receives a request from a service provider to obtain a pass code for an end user who had previously contacted the service provider to obtain assistance with their computing device 102 that is experiencing computer problems. The service provider may receive the notification of the problematic computing device 102 from the end user via telephone, email, or an instant message. The service provider may be known to the end user. For instance, the service provider may have been known by the end user because of a warrantee or extended service plan. In this instance, the service provider is typically the manufacturer and/or retailer of the computing device 102. The process then proceeds to block 506.

In block 506, the RPAT online service provides a pass code to the service provider for the end user. The service provider in turn provides the pass code to the end user of the problematic computing device 102. The process then proceeds to block 508.

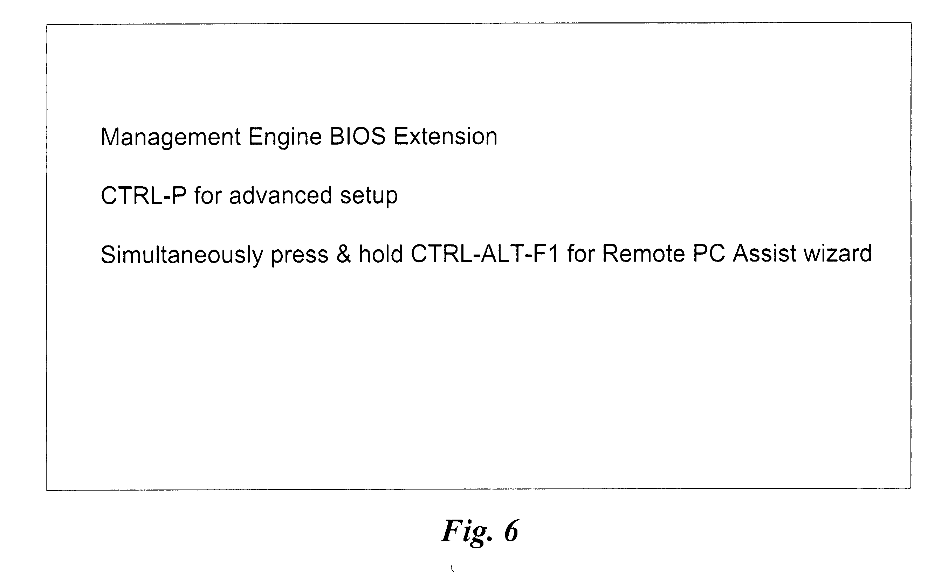

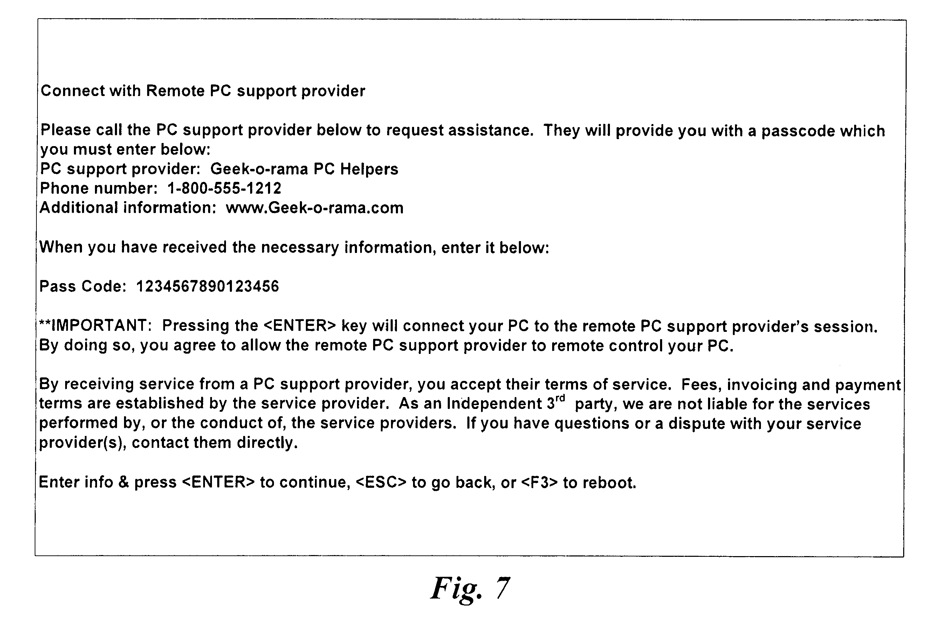

In block 508, the RPAT online service infrastructure 104 is securely connected to the end user computing device 102. To securely connect to the RPAT online service infrastructure 104, the end user must enter the pass code when prompted by a remote PC assist wizard user interface. As previously indicated, there are two remote PC assist wizard user interfaces, an OS-resident remote PC assist wizard and a pre-OS remote pc assist wizard (which is a BIOS-based user interface). To start an interaction with the RPAT online service, the end user must press a CTRL-ALT-F1 key sequence. If the OS of the computing device 102 is operable, the OS-resident remote PC assist wizard user interface will be presented to the end user. If the OS of the computing device 102 is not operable, the pre-OS remote PC assist wizard user interface will be presented to the user. FIG. 6 is a screen shot illustrating a boot screen with a message indicating to an end user how to enter the pre-OS remote PC assist wizard user interface by simultaneously pressing the CTRL-ALT-F1 keys. In either case, the user will be prompted for the pass code that was received from the service provider. FIG. 7 is a screen shot illustrating a prompt for the pass code entry according to an embodiment of the present invention. Once the pass code is entered and the end user has pressed the <ENTER> key, AMT firmware makes a secure, trusted connection to the RPAT online service at a known pre-programmed location if the pass code is valid. The pass code not only allows the end user computing device 102 to be securely connected to the RPAT online service infrastructure 104, it also uniquely identifies which service provider and technician session the end user computing device 102 is trying to connect with to enable the service provider technician to use its remote console application to diagnose repair, and/or optimize the end user computing device 102 that is malfunctioning. The process proceeds to block 510.

In block 510, the RPAT online service is securely connected to the service technician PC 180 of the service provider. For the service provider to securely connect to the RPAT online service, the service provider technician must also provide the pass code to the RPAT online service in order to obtain a secure, trusted connection to a known pre-programmed location. The process then proceeds to block 512.

At block 512, the RPAT online service links the service technician PC 180 to a PC session indicated by the pass code. The process then proceeds to block 514.

At block 514, the RPAT online service enables the service technician PC 180 to connect through the RPAT online service infrastructure 104 to the problematic computing device 102. The service technician, having remote access to the computing device 102 via the service technician PC 180, can now assist the end user in the diagnosis and repair of the problematic computing device 102.

In an alternative embodiment, the present invention provides an end user with the ability to locate a valid, applicable service provider that can help the end user with computer problem(s) that the end user is encountering with his/her computing device 102. The end user may find the service provider regardless of the state of his/her computing device 102, even when the user's operating system will not boot, the computer is having blue screen problems, etc., and even when the end user has had no interaction with the RPAT online service and/or a service provider.

Embodiments of the present invention use a centralized rendezvous point as a trusted jumping off point for providing the user a list of relevant and trusted service providers to choose from, without complicated user configuration steps. RPAT online service infrastructure 104 will provide an end user with a list of qualified service providers that can help the end user with his/her problematic computing device 102 when the user enters the remote PC assist wizard user interface and selects "search for service providers." This provides non-technical users as well as technical users, and particularly small business users without IT departments as well as consumer PC users, access to the emerging outsourced/remote service provider businesses, such as, for example, GeekSquad, Firedog, PlumChoice, HiWired, etc. By being agnostic to manufacturers of computing devices or providers of service, the end user has choice, control, and ultimately confidence that he/she is being served as well as they can be - or can find another alternative if they are not. Embodiments of the present invention also provide the ability for the end user to select from a broader set of service providers than their warrantee and extended service plan provides, particularly when either of those relationships have expired or the end user's issue(s) are outside of the scope of those service providers' coverage.

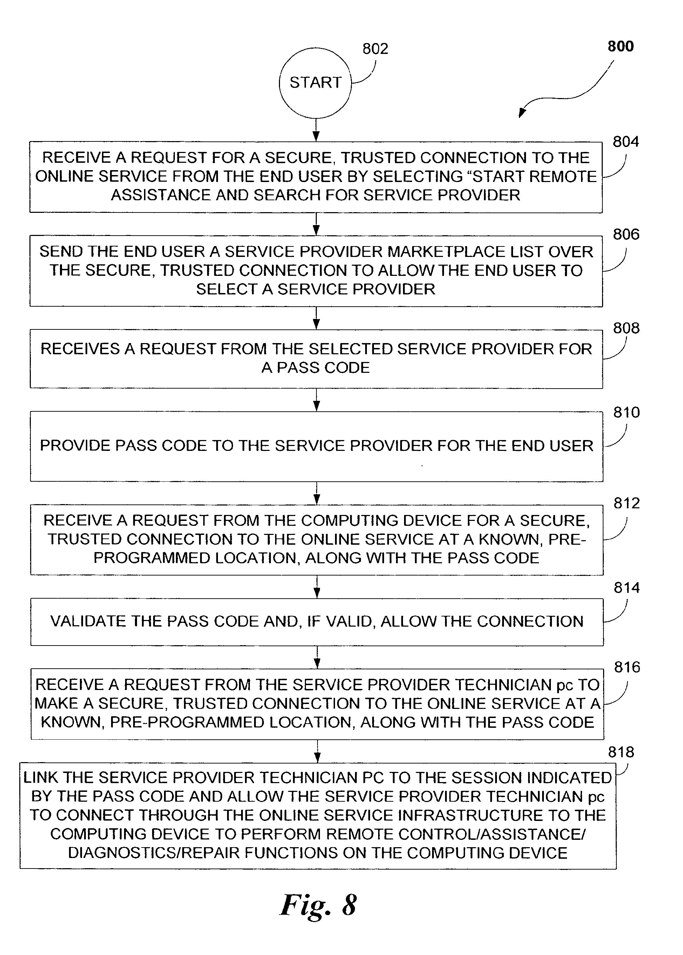

FIG. 8 is a flow diagram 800 describing another exemplary method for remote PC assist technology (RPAT) services according to an embodiment of the present invention. The invention is not limited to the embodiment described herein with respect to flow diagram 800. Rather, it will be apparent to persons skilled in the relevant art(s) after reading the teachings provided herein that other functional flow diagrams are within the scope of the invention. The process begins with block 802, where the process immediately proceeds to block 804.

In block 804, the RPAT online service receives a request for a secure, trusted connection to the RPAT online service at a known pre-programmed location. This is accomplished by an end user pressing and simultaneously holding a CTRL-ALT-F1 key sequence in a BIOS boot screen and selecting "start remote assistance and search for service providers." The CTRL-ALT-F1 key sequence causes the AMT firmware to make the secure, trusted connection to the RPAT online service. The process then proceeds to block 806.

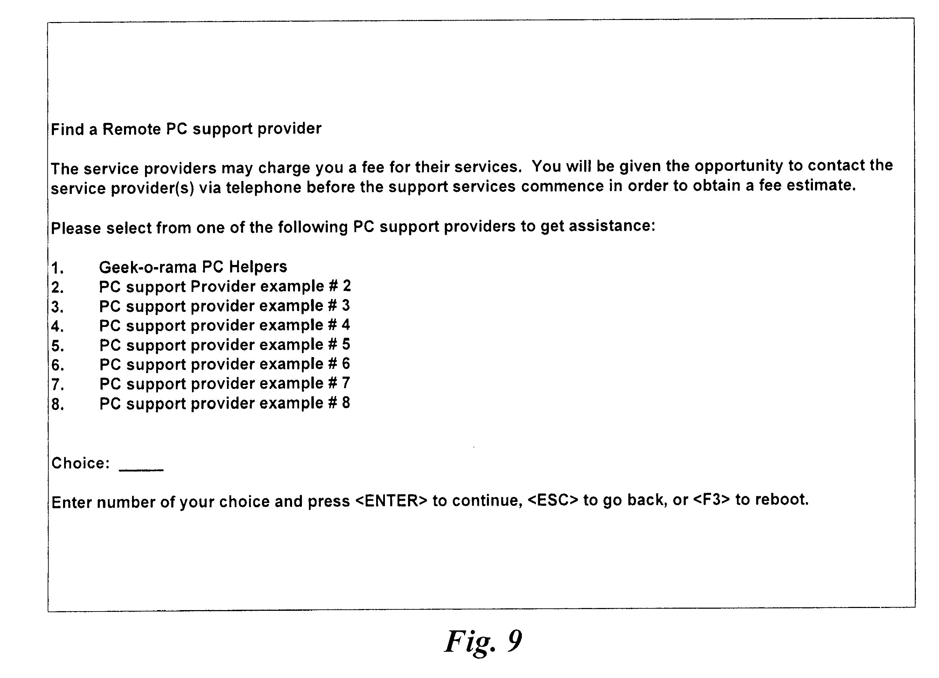

In block 806, the RPAT online service sends the end user a service provider marketplace list over the secure, trusted connection to enable the end user to select a service provider. FIG. 9 is an exemplary screen shot of a provider marketplace list selection. The marketplace list of service providers may have the following additional capabilities/benefits, all of which may be managed by the RPAT online service infrastructure 104 without subsequent modifications to firmware on the computing devices 102:
provide the capability for some level of control by the manufacturer and/or retailer of the computing device 102 to ensure they (or their designated service partners) are shown at the top of the marketplace list. This helps ensure that the end user takes advantage of any included support with the purchase of the computing device 102;
provide the capability for complete level of control by the manufacturer and/or retailer of the computing device 102 to ensure they (or their designated service partners) are the only service provider(s) shown on the list, possibly only for the initial lifetime of the warrantee coverage period of the computing device 102 (after which point control expires and the end user is provided with the "open list"). This helps ensure the end user takes advantage of any included support with the purchase of their computing device 102, while also ensuring that the end user is not "locked out" of future opportunities;
the ability to filter/sort the marketplace list based on service provider relevance to the user's current location, based on auto detection location using IP location technology, without the user needing to provide additional information;
the ability to filter/sort the marketplace list based on service provider relevance to the end user's current computing device problem(s), based on input provided by the end user (e.g., problem category selection, alternate/home location, price, service terms, etc.);
the ability to filter/sort the marketplace list based on recent error/warning events collected by the firmware on the computing device 102;
the ability to bring new customers to a service provider that they would not previously have access to without having appeared in the marketplace, and the ability to charge the service a new customer "bounty" for providing this value to the service provider;
the ability to filter/sort the marketplace list based on a "pay for placement" scheme that service providers can engage in on a semi-permanent or very temporal basis (i.e., ad campaign during promotional period) - similar to how many online search engines and directory services, but with the unique ability to drive the end user to a direct, simple and secure connection to the service provider starting from the selection in the marketplace list;
the ability to filter/sort the marketplace list based on a user rating system, whereby users optionally participate in rating the service providers based on their experience during remote help sessions;
the ability to filter/sort the marketplace list based on user favorites;
the ability to sort the marketplace list based on most recently used (as per usage experience of the specific user/computing device 102); and
the ability to sort the list based on actual service provider performance/current availability state (e.g., current waiting/in service "call queue" depth in conjunction with known number of computing devices 102 connected to the service providers and/or data provided to the RPAT online service infrastructure 104 by the service providers.
Once the end user has chosen a service provider, the end user will communicate with that service provider via one of telephone, email, or an instant message. The process proceeds to block 808.

In block 808, the RPAT online service will receive a request for a pass code from the selected service provider. The process proceeds to block 810.

In block 810, the RPAT online service will provide the service provider with the pass code to be used by the end user. Upon receiving the pass code, the service provider will provide the end user with the pass code, which the end user will enter into the pre-OS remote PC assist wizard user interface. The process then proceeds to block 8i2.

In block 812, the RPAT online service infrastructure 104 receives the request for a secure, trusted connection to the service from the AMT at the known, pre-programmed location, along with the pass code. The process then proceeds to block 814.

In block 814, the RPAT online service infrastructure 104 validates the pass code and allows the secure connection. The end user may now wait for the service provider technician connection. The process proceeds to block 816.

At block 816, the RPAT online service infrastructure 104 receives a request from the service provider technician PC 180 to make a secure, trusted connection to the RPAT online service at a known pre-programmed location, along with the pass code. The process proceeds to block 818.

At block 818, the RPAT online service infrastructure 104 links the service provider technician PC 180 to the session indicated by the pass code and the service provider technician PC 180 connects through the RPAT online service infrastructure 104 to computing device 102. Via the computing device AMT/ME firmware, the service provider technician is able to perform remote control/assistance/diagnostics/repair functions on the computing device 102.

Although embodiments of the present invention focused on the ability for an end user to access the RPAT online service infrastructure 104 through BIOS screens (pre-OS remote PC assist wizard user interface) that are always functional even when the end user's OS or other software is non-functional, the end user may also access the RPAT online service infrastructure 104 through the OS-resident remote PC assist wizard user interface as well if the OS is somewhat functional.

While various embodiments of the present invention have been described above, it should be understood that they have been presented by way of example only, and not limitation. It will be understood by those skilled in the art that various changes in form and details may be made therein without departing from the spirit and scope of the invention as defined in the appended claims. Thus, the breadth and scope of the present invention should not be limited by any of the above-described exemplary embodiments, but should be defined in accordance with the following claims and their equivalents.

This disclosure includes all the subject matter recited in the following clauses:
1. A method for providing a remote help session comprising:
   receiving, at an online service datacenter, a request from a remote service provider computer to obtain a pass code for an end user of a malfunctioning computing device;
   sending the pass code to the remote service provider computer, wherein a service provider technician provides the pass code to the end user;
   securely connecting the malfunctioning computing device to the online service datacenter;
   securely connecting the remote service provider computer to the online service datacenter;
   linking the remote service provider computer to a PC session indicated by the pass code and enabling the service provider computer to connect through the online service datacenter to the malfunctioning computing device, wherein the remote service provider computer, via firmware residing on the malfunctioning computing device, enables the service provider technician to diagnose, repair, and/or optimize the malfunctioning computing device.
2. The method of clause 1, wherein the end user communicates to the service provider the need to obtain assistance for the malfunctioning computing device prior to the online service datacenter receiving the request from the remote service provider computer.
3. The method of clause 2, wherein the communication to the service provider comprises a telephone call, an email, or an instant message.
4. The method of clause 1, wherein securely connecting the malfunctioning computing device to the online service datacenter comprises validating the pass code, wherein the pass code is entered into a user interface to enable the firmware to make a secure, trusted connection to the online service datacenter.
5. The method of clause 4, wherein the user interface comprises an OS-resident remote PC assist wizard user interface when the OS (operating system) is operable.
6. The method of clause 4, wherein the user interface comprises a pre-OS remote PC assist wizard user interface when the OS and the communication circuitry is not operable.
7. The method of clause 6, wherein the pre-OS remote PC assist wizard user interface is activated by simultaneously pressing a CTRL-ALT-F1 key sequence.
8. The method of clause 4, wherein the firmware comprises an Active Management Technology (AMT) firmware running on a Management Engine (ME).
9. The method of clause 1, wherein securely connecting the malfunctioning computing device to the online service datacenter comprises making a secure, trusted connection to the online service datacenter at a known pre-programmed location using Active Management Technology (AMT) firmware running on a Management Engine (ME) of the malfunctioning computing device.
10. The method of clause 1, wherein securely connecting the remote service provider computer to the online service datacenter comprises making a secure, trusted connection to the online service datacenter at a known pre-programmed location by providing the pass code to the online service datacenter.
11. The method of clause 1, wherein prior to receiving, at an online service datacenter, a request from a remote service provider computer to obtain a pass code for an end user of a malfunctioning computing device, receiving, at the online service datacenter, a request from the malfunctioning computing device to start a remote assistance session by searching for service providers via a secure, trusted connection to the online service datacenter, wherein the online service datacenter sends the malfunctioning computing device a marketplace listing of potential service providers.
12. The method of clause 11, wherein the marketplace listing of potential service providers includes a manufacturer and/or retailer of the computing device at the top of the marketplace list.
13. The method of clause 11, wherein the marketplace listing of potential service providers only includes a manufacturer, retailer, and/or designated service partners of the manufacturer and/or retailer.
14. The method of clause 11, wherein the online service datacenter comprises an ability to filter and sort the marketplace list based on recent error/warning events collected by the firmware on the computing device.
15. A tangible, machine readable medium comprising a plurality of instructions, that in response to being executed, result in a computing device at an online datacenter receiving a request from a remote service provider computer to obtain a pass code for an end user of a malfunctioning computing device;
   sending the pass code to the remote service provider computer, wherein a service provider technician provides the pass code to the end user;
   securely connecting the malfunctioning computing device to the online service datacenter;
   securely connecting the remote service provider computer to the online service datacenter;
   linking the remote service provider computer to a PC (personal computer) session indicated by the pass code and enabling the service provider computer to connect through the online service datacenter to the malfunctioning computing device, wherein the remote service provider computer, via firmware residing on the malfunctioning computing device, enables the service provider technician to diagnose, repair, and/or optimize the malfunctioning computing device.
16. The tangible, machine readable medium of clause 15, wherein the end user communicates to the service provider the need to obtain assistance for the malfunctioning computing device prior to the online service datacenter receiving the request from the remote service provider computer.
17. The tangible, machine readable medium of clause 16, wherein the communication to the service provider comprises a telephone call, an email, or an instant message.
18. The tangible, machine readable medium of clause 15, wherein securely connecting the malfunctioning computing device to the online service datacenter comprises validating the pass code, wherein the pass code is entered into a user interface to enable the firmware to make a secure, trusted connection to the online service datacenter.
19. The tangible, machine readable medium of clause 18, wherein the user interface comprises an OS-resident remote PC assist wizard user interface when the OS (operating system) is operable.
20. The tangible, machine readable medium of clause 18, wherein the user interface comprises a pre-OS remote PC assist wizard user interface when the OS and the communication circuitry is not operable.
21. The tangible, machine readable medium of clause 20, wherein the pre-OS remote PC assist wizard user interface is activated by simultaneously pressing a CTRL-ALT-F1 key sequence.
22. The tangible, machine readable medium of clause 18, wherein the firmware comprises an Active Management Technology (AMT) firmware running on a Management Engine (ME).
23. The tangible, machine readable medium of clause 15, wherein securely connecting the malfunctioning computing device to the online service datacenter comprises making a secure, trusted connection to the online service datacenter at a known pre-programmed location using Active Management Technology (AMT) firmware running on a Management Engine (ME) of the malfunctioning computing device.
24. The tangible, machine readable medium of clause 15, wherein securely connecting the remote service provider computer to the online service datacenter comprises making a secure, trusted connection to the online service datacenter at a known pre-programmed location by providing the pass code to the online service datacenter.
25. The tangible, machine readable medium of clause 15, wherein prior to receiving, at an online service datacenter, a request from a remote service provider computer to obtain a pass code for an end user of a malfunctioning computing device, receiving, at the online service datacenter, a request from the malfunctioning computing device to start a remote assistance session by searching fur service providers via a secure, trusted connection to the online service datacenter, wherein the online service datacenter sends the malfunctioning computing device a marketplace listing of potential service providers.
26. The tangible, machine readable medium of clause 25, wherein the marketplace listing of potential service providers includes a manufacturer and/or retailer of the computing device at the top of the marketplace list.
27. A system for providing a remote help session comprising:
   a malfunctioning computing device having a tamper resistant component comprising an OOB (Out-Of-Band) processor, the OOB processor including a management engine and firmware running on the ME to connect via a connect service infrastructure to a remote service provider technician computer, wherein the firmware includes hard coded connection and trust settings to allow the malfunctioning computing device to create a secure, trusted connection to the connect service infrastructure, after accepting a license agreement to use the connect service infrastructure and to complete the secure connection through the connect service infrastructure to the service provider technician computer using a pass code entry of a single string of digits to enable the service provider computer to diagnose, repair, and/or optimize the malfunctioning computing device.
28. The system of clause 27, wherein the malfunctioning computing device to create the secure, trusted connection to the connect service infrastructure via a pre-OS (Operating System) remote PC (personal computer) assist wizard user interface when the OS is malfunctioning.
29. The system of clause 28, wherein the pre-OS remote PC assist wizard user interface comprises a BIOS (Basic Input/Output)-based user interface implemented as enhancements to a Management Engine BIOS Extensions (MEBx) module, the enhancements specific to operations with the connect service infrastructure.
30. The system of clause 27, wherein the connect service infrastructure to provide the malfunctioning computing device with a marketplace list of service providers to select from to provide assistance to the malfunctioning computing device of an end user.

## Claims

1. A method for providing a remote help session comprising:
receiving, at an online service datacenter, a request from a remote service provider computer to obtain a pass code for an end user of a malfunctioning computing device;
sending the pass code to the remote service provider computer, wherein a service provider technician provides the pass code to the end user;
securely connecting the malfunctioning computing device to the online service datacenter;
securely connecting the remote service provider computer to the online service datacenter;
linking the remote service provider computer to a PC session indicated by the pass code and enabling the service provider computer to connect through the online service datacenter to the malfunctioning computing device, wherein the remote service provider computer, via firmware residing on the malfunctioning computing device, enables the service provider technician to diagnose, repair, and/or optimize the malfunctioning computing device.

2. The method of claim 1, wherein the end user communicates to the service provider the need to obtain assistance for the malfunctioning computing device prior to the online service datacenter receiving the request from the remote service provider computer.

3. The method of claim 2, wherein the communication to the service provider comprises a telephone call, an email, or an instant message.

4. The method of claim 1, wherein securely connecting the malfunctioning computing device to the online service datacenter comprises validating the pass code, wherein the pass code is entered into a user interface to enable the firmware to make a secure, trusted connection to the online service datacenter.

5. The method of claim 4, wherein the user interface comprises an OS-resident remote PC assist wizard user interface when the OS (operating system) is operable.

6. The method of claim 4, wherein the user interface comprises a pre-OS remote PC assist wizard user interface when the OS and the communication circuitry is not operable.

7. The method of claim 6, wherein the pre-OS remote PC assist wizard user interface is activated by simultaneously pressing a CTRL-ALT-F1 key sequence.

8. The method of claim 4, wherein the firmware comprises an Active Management Technology (AMT) firmware running on a Management Engine (ME).

9. The method of claim 1, wherein securely connecting the malfunctioning computing device to the online service datacenter comprises making a secure, trusted connection to the online service datacenter at a known pre-programmed location using Active Management Technology (AMT) firmware running on a Management Engine (ME) of the malfunctioning computing device.

10. The method of claim 1, wherein securely connecting the remote service provider computer to the online service datacenter comprises making a secure, trusted connection to the online service datacenter at a known pre-programmed location by providing the pass code to the online service datacenter.

11. A system for providing a remote help session comprising:
a malfunctioning computing device having a tamper resistant component comprising an OOB (Out-Of-Band) processor, the OOB processor including a management engine and firmware running on the ME to connect via a connect service infrastructure to a remote service provider technician computer, wherein the firmware includes hard coded connection and trust settings to allow the malfunctioning computing device to create a secure, trusted connection to the connect service infrastructure, after accepting a license agreement to use the connect service infrastructure and to complete the secure connection through the connect service infrastructure to the service provider technician computer using a pass code entry of a single string of digits to enable the service provider computer to diagnose, repair, and/or optimize the malfunctioning computing device.

12. The system of claim 11, wherein the malfunctioning computing device to create the secure, trusted connection to the connect service infrastructure via a pre-OS (Operating System) remote PC (personal computer) assist wizard user interface when the OS is malfunctioning.

13. The system of claim 12, wherein the pre-OS remote PC assist wizard user interface comprises a BIOS (Basic Input/Output)-based user interface implemented as enhancements to a Management Engine BIOS Extensions (MEBx) module, the enhancements specific to operations with the connect service infrastructure.

14. The system of claim 11, wherein the connect service infrastructure to provide the malfunctioning computing device with a marketplace list of service providers to select from to provide assistance to the malfunctioning computing device of an end user.

15. A tangible, machine readable medium comprising a plurality of instructions, that in response to being executed, result in a computing device at an online datacenter carrying out all of the steps of a method as claimed in any one of claims 1 to 10.
